# EUROPÄISCHE PATENTSCHRIFT

(11) **EP 2 590 832 B1**
(45) Veröffentlichungstag und Bekanntmachung des Hinweises auf die Patenterteilung: **15.01.2014**
(21) Anmeldenummer: 11740832.8
(22) Anmeldetag: 01.07.2011
(51) Int. Cl.: B60J 5/04

(54) **FALZGESTALTUNG EINER BAUTEILVERBINDUNG**
FOLD FORMATION OF A COMPONENT CONNECTION
CONFIGURATION D'UN REPLI POUR UN ASSEMBLAGE DE PIECES

(30) Priorität: 06.07.2010 DE 102010026259
(43) Veröffentlichungstag der Anmeldung: 15.05.2013
(73) Patentinhaber: Daimler AG, 70327 Stuttgart (DE)
(72) Erfinder: STEFANI, Uwe, 71069 Sindelfingen (DE); WALTHER, Ulrich, 94051 Hauzenberg (DE)
(74) Vertreter: JENSEN & SON
(86) Internationale Anmeldenummer: PCT/EP2011/003282
(87) Internationale Veröffentlichungsnummer: WO 2012/003948

(56) Entgegenhaltungen:
- WO-A1-94/21740
- WO-A1-2011/084378
- DE-A1- 1 627 719
- DE-A1- 10 248 795

## Beschreibung

Die Erfindung betrifft eine Bauteilverbindung zwischen einem ersten und einem zweiten Bauteil, wobei das erste Bauteil einen Falz aufweist, in den ein Randbereich des zweiten Bauteils wenigstens abschnittsweise eingreift und die Bauteile im Bereich des Falzes zumindest abschnittsweise durch ein Adhäsionsmittel haftend miteinander verbunden sind.

Bei einem Falz handelt es sich um eine, u. a. bei Blechverbindungen vorkommende Vertiefung oder Falte eines ersten Teils, in die ein Rand oder Vorsprung eines zweiten, mit dem ersten zu verbindenden Teil eingreift. Je nach Beanspruchung und Einsatzgebiet gibt es unterschiedlich ausgeführte Falze, insbesondere einfache oder doppelte Falze, stehende oder liegende oder auch Deckfalze. Bei der Verbindung von Blechen hängt die Haltbarkeit des Falzes vor allem von der Pressung ab, mit der die Falznaht geschlossen wird.

Um eine Falzverbindung vor äußeren Einflüssen zu schützen werden in der Automobilindustrie Falzverbindungen von Anbauteilen oftmals unabhängig davon, welche Werkstoffe für die Bauteile verwendet werden, mit einer PVC-Nahtabdichtung versehen. Auf diese Weise wird eine Korrosion im Nahtbereich effektiv vermieden. Sofern die zu verbindenden Bauteile aus Aluminium ausgeführt sind, ist es allerdings möglich, auf die zuvor genannte Nahtabdichtung zu verzichten, insbesondere wenn der Falz vollständig mit einem Adhäsionsmittel, bspw. Klebstoff, gefüllt ist. Nachteilig an der vollständigen Füllung des Falzes mit einem Adhäsionsmittel ist jedoch, dass in der Regel ein großer Aufwand für die Bauteil- und/oder Anlagenreinigung erforderlich ist. Dies ist vor allem darauf zurückzuführen, dass überschüssiges Adhäsionsmittel rückstandsfrei entfernt werden muss.

Alternative Strategien im Automobilbau sehen den vollständigen Verzicht auf Nahtabdichtungen und die Inkaufnahme des Korrosionsrisikos oder den Einsatz aufwendiger Lackierprozesse vor.

In Bezug auf die im Automobilbereich eingesetzten Blechbauteile ist weiterhin zu berücksichtigen, dass diese in der Regel mit einer Lackschicht versehen sind, die im Wege einer kathodischen Tauchlackierung (KTL) hergestellt wird. Bei dieser Art einer Bauteilbeschichtung ist es von großer Bedeutung, dass die Oberfläche der Bauteile, insbesondere der Blechbauteile, vollflächig von der KTL-Beschichtung bedeckt ist.

Ausgehend von dem bekannten Stand der Technik, siehe z.B. die Dokumente WO 94/21740 oder WO2011/084378, sowie den hieraus resultierenden Problemen liegt der Erfindung die Aufgabe zugrunde, eine Bauteilverbindung, die einen Falz aufweist, derart weiterzubilden, dass eine Applikation des Adhäsionsmittels ohne wesentliche Verunreinigung der sichtbaren Oberflächen der Bauteile sowie der Fertigungsanlagen erfolgt. Gleichzeitig sollte eine vollständige Beschichtung, insbesondere durch KTL-Beschichten, auch im Bereich des Falzendes möglich sein. Die anzugebende Falzverbindung sollte ferner derart gestaltet sein, dass trotz des Verzichts auf eine Nahtabdichtung eine Korrosion der Bauteile zuverlässig vermieden wird.

Die vorstehende Aufgabe wird mit einer Bauteilverbindung gemäß Anspruch 1 gelöst. Vorteilhafte Ausführungsformen der Erfindung sind Gegenstand der abhängigen Ansprüche und werden in der folgenden Beschreibung unter teilweiser Bezugnahme auf die Figuren näher erläutert.

Erfindungsgemäß ist eine Bauteilverbindung zwischen einem ersten und einem zweiten Bauteil, wobei das erste Bauteil einen Falz aufweist, in den ein Randbereich des zweiten Bauteils wenigstens abschnittsweise eingreift und die Bauteile im Bereich des Falzes zumindest abschnittsweise durch ein Adhäsionsmittel haftend miteinander verbunden sind, derart weitergebildet worden, dass ein Endbereich des Falzes derart umgeformt ist, dass ein Abstand zwischen dem ersten und dem zweiten Bauteil in Richtung des Endbereiches größer wird, so dass ein trichterförmiger, nach außen geöffneter Zwischenraum zwischen den beiden Bauteilen gebildet wird, in dem die Bauteiloberflächen der beiden Bauteile entweder über das Adhäsionsmittel miteinander verbunden oder vollflächig mit einer Beschichtung versehen sind.

Die erfindungsgemäße technische Lösung zeichnet sich somit dadurch aus, dass der Endbereich des Falzes derart geformt ist, dass die Applikation des Adhäsionsmittels auf einfache Weise möglich ist und gleichzeitig sicher gestellt wird, dass die den trichter- oder keilförmigen Zwischenraum umgebenden Oberflächen des ersten und zweiten Bauteils, die nicht vom Adhäsionsmittel bedeckt sind, vollflächig mit einer Beschichtung versehen sind. Die Verformung des Endbereichs des Falzes ist hierbei derart ausgeführt, dass das Blechende des ersten Bauteils durch Biegen oder Knicken abgestellt wird.

Die erfindungsgemäß ausgeführte Bauteilverbindung stellt somit eine spezielle Art einer Falzgestaltung dar. Die spezielle konstruktive Falzgestaltung gemäß der Erfindung lässt eine zuverlässige und gute Füllung des Falzes mit einem Adhäsionsmittel sowie eine ordnungsgemäße, vollflächige KTL-Beschichtung zu. Auf diese Weise können Einsparungen aufgrund der nicht mehr benötigten Nahtabdichtung, unabhängig davon, welcher Werkstoff für die Bauteile verwendet wird, verwirklicht werden. Darüber hinaus wird auf effektive Weise die Nacharbeit der Bauteile aufgrund möglicher Adhäsionsmittelverschmutzungen vermieden.

Bei dem Adhäsionsmittel, das zwischen das erste und zweite Bauteil, von denen eines einen Falz aufweist, eingebracht wird, handelt es sich vorzugsweise um einen Klebstoff. Alternativ hierzu ist es grundsätzlich denkbar, ein Lot als Adhäsionsmittel zu verwenden.

Der Endbereich eines erfindungsgemäß ausgebildeten Falzes ist derart umgebogen oder geknickt, dass der Abstand zwischen dem ersten und dem zweiten Bauteil in Richtung des offenen Endes zwischen den Bauteilen größer wird. Durch eine derartige Gestaltung befindet sich zwischen dem ersten und zweiten Bauteil im Endbereich des Falzes eine keil- bzw. trichterförmige Öffnung, in die auf geeignete Weise ein Adhäsionsmittel, insbesondere ein Klebstoff, applizierbar ist. Die Applikation des auf vorteilhafte Weise als Adhäsionsmittel verwendeten Klebstoffes findet derart statt, dass der offene Bereich zwischen erstem und zweitem Bauteil einerseits mit dem Klebstoff gefüllt wird, während andererseits die im Endbereich des Falzes offen zugänglichen Oberflächen der Bauteile vollflächig mit einer KTL-Beschichtung versehen werden. Auf diese Weise wird zum einen sichergestellt, dass kein Klebstoff aus dem Randbereich des Falzes hinausläuft und zum anderen, dass die Bauteile auch im Endbereich des Falzes zuverlässig vollflächig mit einer KTL-Beschichtung versehen sind.

Das erfindungsgemäße Verfahren zur Herstellung einer Bauteilverbindung mittels eines Falzes ist auf geeignete Weise grundsätzlich für beliebige Bleche, insbesondere unabhängig vom jeweils verwendeten Werkstoff, einsetzbar. In einer speziellen Ausführungsform der Erfindung handelt es sich bei den zu verbindenden Bauteilen um Aluminiumbauteile, insbesondere Aluminiumbleche.

Im Folgenden wird die Erfindung ohne Beschränkung des allgemeinen Erfindungsgedankens anhand von Ausführungsbeispiel unter Zuhilfenahme von Figuren näher erläutert. Dabei zeigen:
- Fig. 1: eine Falzverbindung nach dem Stand der Technik sowie
- Fig. 2: eine erfindungsgemäße Falzgestaltung.

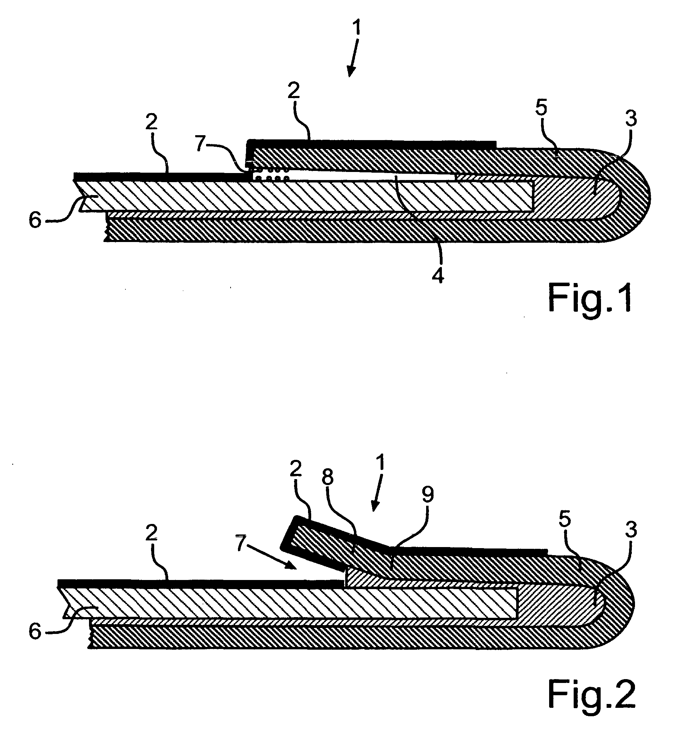

Fig. 1 zeigt die Gestaltung einer Falzverbindung, wie sie aus dem Stand der Technik bekannt ist. Das erste Bauteil 5 weist einen Falz 1 auf, in den der Randbereich eines zweiten Bauteils 6 hineinragt. Bei den in diesem Ausführungsbeispiel miteinander verbundenen Bauteilen 5, 6 handelt es sich um Aluminiumbleche. Beide Bauteile 5, 6 sind an ihrer Oberfläche mit einer KTL-Beschichtung 2 versehen. Allerdings befindet sich in einem Endbereich 4 des Falzes 1 ein Spalt 7, der nur über eine unvollständige KTL-Schicht 2 verfügt. In diesem Bereich kann eine vollflächige Beschichtung der Bleche 5, 6 nicht zuverlässig sichergestellt werden. Darüber hinaus verfügen die Oberflächen der beiden Bleche 5, 6 in einem von der Öffnung weiter entfernten hinteren Teil des Endbereichs 4 über einen nicht beschichteten Oberflächenbereich. Dieser Oberflächenbereich ist weder mit einer KTL-Beschichtung 2 noch mit Klebstoff 3 versehen. Da eine zuverlässige Beschichtung der Bauteile 5, 6 im Falzbereich mit der in Fig. 1 dargestellten Falzgestaltung nicht sichergestellt werden kann, ist eine derartige Bauteilverbindung in diesem Bereich stark korrosionsgefährdet.

Das zuvor geschilderte Problem wird mit einer erfindungsgemäß gestalteten Falzverbindung, wie sie in Fig. 2 dargestellt ist, gelöst. Wesentliches Merkmal des Falzes 1 des Bleches 5, in das ein Randbereich des Bleches 6 hineinragt, ist der vom Blech 6 weg gebogene und auf diese Weise abgestellte Endbereich 8 des Bleches 5. Durch einen derart gebogenen bzw. geknickten Endbereich 8 des Falzes 1 wird zunächst eine trichterförmige bzw. keilförmige Öffnung 7 im Endbereich des Falzes 1 zwischen den beiden zu verbindenden Bauteilen 5, 6 erzeugt, die sich vom Randbereich des Bleches 6 ausgehend verbreitert. Die Verformung 8 im Endbereich des Falzes erstreckt sich von einer zumindest annähernd parallel zur Blechendkante des ersten Blechs 5 verlaufenden Biege- oder Knicklinie 9 bis zu der Blechendkante des ersten Blechs. Die dargestellte Gestaltung des Endbereiches des Falzes 1 ermöglicht vor allem eine sichere Applikation eines Klebstoffes 3.

In diesem Zusammenhang ist es denkbar, den Klebstoff 3 entweder vor dem Einführen des Bauteils 6 in den Falz 1 auf wenigstens eines der Bauteile aufzutragen oder den Klebstoff nach dem Verfügen der Bauteile 5, 6 in die trichterförmige Öffnung 7 zu applizieren. Wesentlich ist in jedem Fall, dass der Klebstoff 3 im verformten Endbereich 8 zwischen dem Bauteil 5 und dem Bauteil 6 derart eingebracht wird, dass einerseits die Oberflächen der Bauteile 5, 6 in einem hinteren Bereich der Öffnung 7 mit dem Klebstoff 3 benetzt und haftend mit einander verbunden sind und andererseits im vorderen Bereich der Öffnung 7 der Abstand zwischen den Bauteilen 5, 6 aufgrund der Verformung 8 des Falzes 1 so groß ist, das eine vollflächige KTL-Beschichtung 2 beider Bauteile 5,6 sichergestellt wird. Durch die in Fig. 2 gezeigte Verformung 8 des Falzes 1 in seinem Endbereich und die damit verbundene vollflächige Beschichtung bzw. Klebstoffbenetzung wird eine Korrosion in diesem Bereich zuverlässig verhindert.

Die erfindungsgemäße Gestaltung eines Falzes beruht somit darauf, dass aufgrund der Verformung 8 des Endbereiches des Falzes 1 in Form einer Abkantung des ersten Bauteils 5 der üblicherweise vorhandene Spalt zwischen den beiden Bauteilen 5, 6, der eine sichere, insbesondere vollflächige KTL-Beschichtung nahezu unmöglich macht, nicht vorhanden ist. Vielmehr werden die die Öffnung 7 umgebenden Oberflächen der Bauteile 5, 6 von einem Klebstoff 3 benetzt oder vollflächig mit einer KTL-Beschichtung 2 versehen. Durch die erfindungsgemäße Falzgestaltung wird somit Korrosion in diesem Bereich zuverlässig vermieden, ohne dass eine spezielle Nahtabdichtung, beispielsweise eine PVC-Nahtabdichtung, vorgesehen werden muss.

Ferner stellt die in Fig. 2 dargestellte erfindungsgemäße Ausführung des Endbereiches des Falzes 1 sicher, dass es nicht zu Verschmutzungen der Bauteile durch überschüssigen Klebstoff 2 kommt. Somit müssen die Bauteile 5 und 6 nach Herstellen der Falzverbindung nicht gesondert gereinigt werden und können auch bei noch nicht vollständig getrocknetem Klebstoff gehandhabt werden, ohne dass dies zu Verschmutzungen von Handhabungsmaschinen oder eines Werkers führt.

Die erfindungsgemäße technische Lösung stellt somit sicher, dass zwei Bauteile 5, 6, von denen eines einen Falz 1 aufweist, zuverlässig mittels eines Klebstoffes 3, der im Bereich des Falzes 1 zwischen die Bauteile 5, 6 eingebracht wird, verbunden werden können, ohne dass Klebstoff 3 aus dem Falz hinausläuft. Gleichzeitig wird sichergestellt, dass die Bleche 5, 6 auch im Bereich des Falzendes zuverlässig mit einer KTL-Beschichtung 2 versehen werden können, so dass eine Korrosion in diesem Bereich zuverlässig vermieden wird, ohne einen Korrosionsschutz vorsehen zu müssen.

## Patentansprüche

1. Bauteilverbindung zwischen einem ersten und einem zweiten Bauteil (5, 6), wobei das erste Bauteil (5) einen Falz (1) aufweist, in den ein Randbereich des zweiten Bauteils (6) wenigstens abschnittsweise eingreift und die Bauteile (5, 6) im Bereich des Falzes (1) zumindest abschnittsweise durch ein Adhäsionsmittel (3) haftend mit einander verbunden sind,
**dadurch gekennzeichnet, dass**
ein Endbereich (8) des Falzes (1), der zwischen einer Knickkante oder Biegelinie (9) und einer Abschlusskante des ersten Bauteils (5) angeordnet ist, derart umgeformt ist, dass ein Abstand zwischen dem ersten und dem zweiten Bauteil (5, 6) in Richtung des Endbereiches größer wird, so dass ein trichterförmiger, nach außen geöffneter Zwischenraum (7) zwischen den beiden Bauteilen (5, 6) gebildet wird, in dem die Bauteiloberflächen der beiden Bauteile (5, 6) entweder über das Adhäsionsmittel (3) miteinander verbunden oder vollflächig mit einer Beschichtung (2) versehen sind.

2. Bauteilverbindung nach Anspruch 1,
**dadurch gekennzeichnet, dass**
das Adhäsionsmittel (3) ein Klebstoff ist.

3. Bauteilverbindung nach Anspruch 1,
**dadurch gekennzeichnet, dass**
das Adhäsionsmittel (3) ein Lot ist.

4. Bauteilverbindung nach einem der Ansprüche 1 bis 3,
**dadurch gekennzeichnet, dass**
die Beschichtung (2) im Wege einer kathodischen Tauchlackierung hergestellt ist, es sich somit um eine KTL-Beschichtung handelt.

5. Bauteilverbindung nach einem der Ansprüche 1 bis 4,
**dadurch gekennzeichnet, dass**
wenigstens eines der Bauteile (5, 6) aus einer Aluminium-Legierung besteht.

## Claims

1. Component connection between a first and a second component (5, 6), the first component (5) having a fold (1), into which an edge region of the second component (6) engages at least in sections, and the components (5, 6) being bonded to each other in the region of the fold (1) at least in sections by a bonding means (3),
**characterised in that**
an end region (8) of the fold (1) which is arranged between a bending edge or bend line (9) and a terminating edge of the first component (5) is formed in such a way that a distance between the first and the second component (5, 6) in the direction of the end region is greater so that a funnel-shaped, outwardly open intermediate space (7) is formed between the two components (5, 6), in which the component surfaces of the two components (5, 6) are either connected to each other through the bonding means (3) or are provided with a coating (2) over the whole area.

2. Component connection according to claim 1,
**characterised in that**
the bonding means (3) is an adhesive.

3. Component connection according to claim 1,
**characterised in that**
the bonding means (3) is a solder.

4. Component connection according to one of the claims 1 to 3,
**characterised in that**
the coating (2) is produced in the manner of cathodic dip coating.

5. Component connection according to one of the claims 1 to 4,
**characterised in that**
at least one of the components (5, 6) is made of an aluminium alloy.

## Revendications

1. Assemblage de pièces entre une première et une seconde pièce (5, 6), la première pièce (5) présentant un repli (1) dans lequel une zone de bord de la seconde pièce (6) vient se loger au moins en partie, et les pièces (5, 6) étant assemblées par adhérence dans la région du repli (1) au moins en partie au moyen d'un agent adhésif (3), **caractérisé en ce qu'**une zone d'extrémité (8) du repli (1) qui est disposée entre un bord de pliage ou une ligne de flexion (9) et un bord terminal de la première pièce (5) est façonnée de telle sorte qu'une distance entre la première et la seconde pièce (5, 6) augmente en direction de la zone d'extrémité de sorte qu'un interstice (7) en entonnoir ouvert vers l'extérieur soit ménagé entre les deux pièces (5, 6), les surfaces des deux pièces (5, 6) étant assemblées au moyen de l'agent adhésif (3) ou entièrement recouvertes d'un revêtement (2).

2. Assemblage de pièce selon la revendication 1 **caractérisée en ce que** l'agent adhésif (3) est une colle.

3. Assemblage de pièces selon la revendication 1 **caractérisée en ce que** l'agent adhésif (3) est une soudure.

4. Procédé selon l'une quelconque des revendications 1 à 3, **caractérisé en ce que** le revêtement (2) est fabriqué au moyen d'un vernissage à immersion cathodique, il s'agit par conséquent d'un revêtement KTL.

5. Agencement de pièces selon l'une quelconque des revendications 1 à 4, **caractérisé en ce qu'**au moins l'une des pièces (5, 6) est composée d'un alliage d'aluminium.
